# EUROPEAN PATENT APPLICATION

(11) **EP 1 717 445 A1**
(43) Date of publication of application: **02.11.2006**
(21) Application number: 06113158.7
(22) Date of filing: 26.04.2006
(51) Int. Cl.: F04B 39/02

(54) **Compressor**

(30) Priority: 27.04.2005 JP 2005129753
(71) Applicant: Kabushiki Kaisha Toyota Jidoshokki, 448-8671 Aichi Kariya-shi, Aichi-ken (JP)
(72) Inventor: FUKANUMA, Tetsuhiko, Kariya-shi, Aichi-ken Aichi 448-8671 (JP); YOKOMACHI, Naoya, Kariya-shi, Aichi-ken Aichi 448-8671 (JP); ENAMI, Shingo, Kariya-shi, Aichi-ken Aichi 448-8671 (JP); MURASE, Masakazu, Kariya-shi, Aichi-ken Aichi 448-8671 (JP)
(74) Representative: TBK-Patent

(57) **Abstract**

A compressor includes a housing, a rotary shaft, a bearing, a seal, a shaft seal chamber, a first passage, a second passage and the fluid passage. The first passage connects a crank chamber to the shaft seal chamber The second passage is formed between a lug plate fixed to the rotary shaft and the housing so as to connect the bearing to the crank chamber. The partition is provided in the shaft seal chamber for dividing the shaft seal chamber into a seal-side chamber and a bearing-side chamber. The first passage is in communication with the seal-side chamber of the shaft seal chamber. The fluid passage for accumulating the lubricating oil and for communicating the first passage and the second passage is formed radially inward of an inner circumferential surface of the shaft seal chamber.

## Description

### BACKGROUND OF THE INVENTION

The present invention relates to a compressor and in particular to a peripheral structure of a seal for sealing a rotary shaft of the compressor.

Japanese Unexamined Patent Application Publication (KOKAI) No. 2004-176543 discloses a compressor where a housing including a crank chamber has a cylindrical shaft hole through which a rotary shaft extends and in which a shaft seal member is disposed for sealing the rotary shaft. In this compressor, a recess is formed around the shaft seal member and an oil passage is formed in the housing for connecting the recess to the crank chamber, so that lubricating oil which is drawn from the crank chamber into the oil passage is collected in the recess. In addition, the compressor has an injection circuit for supplying a part of refrigerant gas from the crank chamber to the shaft seal member through the oil passage.

Japanese Unexamined Patent Application Publication (KOKAI) No. 2002-310067 discloses a compressor having a slide bearing supporting a rotary shaft in a housing and a seal which is disposed on the rotary shaft in the housing outside the slide bearing, so that an isolated space is formed by and between the seal and the slide bearing. In this compressor, an oil passage which provides fluid communication between the isolated space and a crank chamber is formed in the housing. In addition, the rotary shaft is pressed against the slide bearing by a force derived from the compression reaction force of the piston thereby to cause deflection of a clearance between the rotary shaft and the bearing, so that an increased portion of the clearance serves as an oil lubrication passage between the isolated space and the crank chamber. By so constructing the compressor, the isolated space between the seal and the bearing and the crank chamber are made in communication with each other by the two passages thereby to allow the lubricating oil to circulate smoothly between the isolated space and the crank chamber, with the result that troubles associated with seizure between the seal and the rotary shaft are prevented.

However, the space formed in the periphery of the shaft seal member or seal (hereinafter referred to as "shaft seal chamber"), such as the aforementioned recess or isolated space is provided around the rotary shaft at a location near to the axial center of the rotary shaft. On the other hand, the crank chamber from which the lubricating oil is drawn into the shaft seal chamber is provided around the rotary shaft at a location that is further from the central axis of the rotary shaft than the shaft seal chamber.

In operation of the compressor when rotating parts such as the rotary shaft, a swash plate and a lug plate are being rotated, a larger amount of lubricating oil is present in radially outer region of the crank chamber under the influence of centrifugal force, and therefore, only a less amount of lubricating oil is present in the vicinity of the rotary shaft. This tendency is especially notable during high-speed rotation period of the compressor when lubrication of the seal is more important.

Since the lubricating oil in refrigerant gas in the crank chamber exists in the form of mist, it is hard to draw a large amount of the lubricating oil into the shaft seal chamber despite the provision of the passage which connects the crank chamber to the shaft seal chamber. Therefore, it is desirable that the lubricating oil which has been drawn into the shaft seal chamber should be retained therein as much as possible.

On the other hand, the lubricating oil which has been drawn into the shaft seal chamber and remains therein is whirled with the rotation of the rotary shaft, and therefore, a larger amount of the lubricating oil exists in the periphery region of the shaft seal chamber under the influence of centrifugal force.

The present invention is directed to a compressor which is capable of effectively lubricating a seal which is provided for preventing refrigerant gas from leaking out of a housing of the compressor along the rotary shaft of the compressor.

### SUMMARY OF THE INVENTION

A compressor according to the present invention provides the following first features. The compressor includes a housing, a rotary shaft, a bearing, a seal, a shaft seal chamber, a first passage, a second passage and a fluid passage. The housing defines a crank chamber. At least one end of the rotary shaft extends out from the housing. The bearing is provided in the housing for rotatably supporting the rotary shaft. The seal is provided on the rotary shaft on an axially outer side of the bearing for preventing refrigerant gas from leaking out of the housing along the rotary shaft. The shaft seal chamber is defined by the seal, the bearing, the housing and the rotary shaft. The first passage connects the crank chamber to the shaft seal chamber so that the refrigerant gas containing therein lubricating oil in the crank chamber is drawn into the shaft seal chamber. The second passage is formed between a lug plate fixed to the rotary shaft and the housing so as to connect the bearing to the crank chamber. The fluid passage for accumulating the lubricating oil and for communicating the first passage and the second passage is formed radially inward of an inner circumferential surface of the shaft seal chamber.

A compressor according to the present invention provides the following second features. The compressor includes a housing, a rotary shaft, a bearing, a seal, a shaft seal chamber, a first passage and a partition. The housing defines a crank chamber. At least one end of the rotary shaft extends out from the housing. The bearing is provided in the housing for rotatably supporting the rotary shaft. The seal is provided on the rotary shaft on an axially outer side of the bearing for preventing refrigerant gas from leaking out of the housing along the rotary shaft. The shaft seal chamber is defined by the seal, the bearing, the housing and the rotary shaft. The first passage connects the crank chamber to the shaft seal chamber so that the refrigerant gas containing therein lubricating oil in the crank chamber is drawn into the shaft seal chamber. The partition is provided in the shaft seal chamber for dividing the shaft seal chamber into a seal-side chamber and a bearing-side chamber. The rotary shaft includes a fifth passage which connects the seal-side chamber of the shaft seal chamber to a suction pressure region and which has a throttle whose cross sectional area is smaller than that of the first passage.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a longitudinal sectional view showing a compressor according to a first embodiment of the present invention;
FIG. 2 is a partial enlarged view showing a peripheral structure of a shaft seal chamber of FIG. 1;
FIG. 3 is a partial enlarged view showing a peripheral structure of a shaft seal chamber of a compressor according to a second embodiment of the present invention;
FIG. 4 is a partial enlarged view showing a peripheral structure of a shaft seal chamber of a compressor according to a third embodiment of the present invention;
FIG. 5 is a partial enlarged view showing a peripheral structure of a shaft seal chamber of a compressor according to a fourth embodiment of the present invention; and
FIG. 6 is a longitudinal sectional view showing a compressor according to a fifth embodiment of the present invention.

### DETAILED DESCRIPTION OF THE PREFERRED EMBODIMENTS

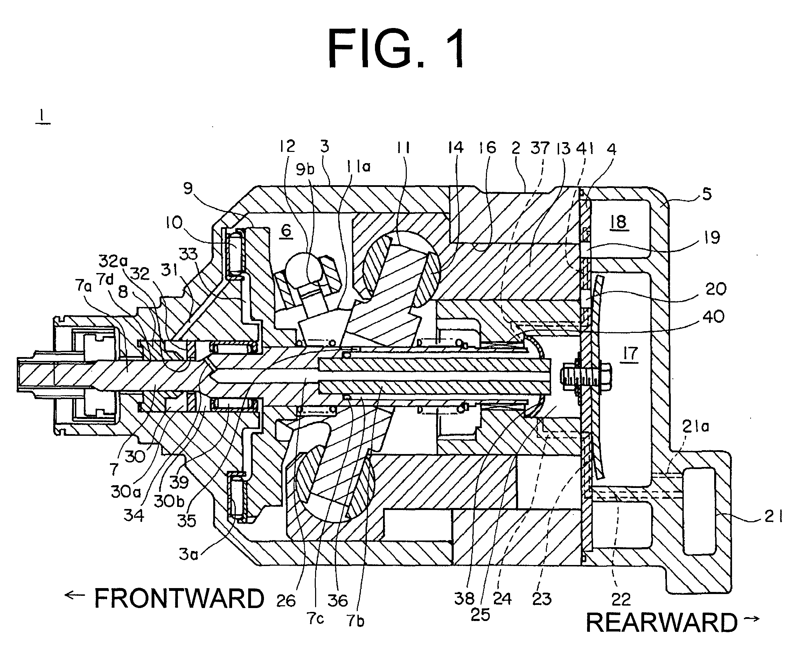

The following will describe embodiments of a compressor according to the present invention with reference to the accompanying drawings. FIG. 1 is a longitudinal sectional view showing a swash plate compressor 1 according to a first embodiment. In FIG. 1, the left side of the drawing is the front side of the compressor 1 and the right side of the drawing is the rear side of the compressor 1.

The compressor 1 includes a cylinder block 2 and a front housing 3 which is joined to the front end of the cylinder block 2 thereby to define a crank chamber 6. A rear housing 5 is joined to the rear end of the cylinder block 2 through a valve plate assembly 4 therebetween.

A drive shaft 7 that serves as a rotary shaft is rotatably provided in the crank chamber 6 at the center of the front housing 3 and the cylinder block 2. The drive shaft 7 is so arranged that a front end of the drive shaft 7 extends out of the front housing 3. The drive shaft 7 includes a first shaft portion 7a which is of a hollowed cylindrical shape having one open end thereof and a second shaft portion 7b which is also of a hollowed cylindrical shape but having the opposite open ends and press-fitted in the first shaft portion 7a, as shown in FIG. 1. An O ring 7c is interposed between the inner circumferential surface of the first shaft portion 7a and the outer circumferential surface of the second shaft portion 7b in the vicinity of the front end of the second shaft portion 7b. A passage 36 is formed between the inner circumferential surface of the first shaft portion 7a and the outer circumferential surface of the second shaft portion 7b. Additionally, an axial passage 26 is formed axially in the second shaft portion 7b and the first shaft portion 7a.

A lug plate 9 is fixed on the drive shaft 7 for rotation therewith in the crank chamber 6. The drive shaft 7 is rotatably supported at the front end portion thereof by a radial roller bearing 39 which serves as a bearing for the rotary shaft and is fitted in the front housing 3 on the front side of the lug plate 9. The rear end of the drive shaft 7 is rotatably supported by a radial roller bearing 40 which is fitted in the cylinder block 2. A thrust bearing 10 is interposed between the lug plate 9 and the inner sidewall of the front housing 3 thereby to rotatably support the lug plate 9 relative to the front housing 3.

A swash plate 11 is provided on the drive shaft 7 on the rear side of the lug plate 9 in such a way that the swash plate 11 is inclinable with respect to the drive shaft 7 while slidable in axial direction of the drive shaft 7. A connecting portion 11a is provided projecting from the swash plate 11 and a pair of guide pins 12 is mounted at the distal end of the connecting portion 11a. The pair of guide pins 12 engages with a pair of guide holes 9b in the lug plate 9, respectively. A plurality of pistons 13 are arranged around the drive shaft 7 and connected to the swash plate 11 through pairs of shoes 14, respectively. The pistons 13 are received reciprocably in the respective cylinder bores 16 which are formed in the cylinder block 2. As the swash plate 11 rotates, the pistons 13 are reciprocated in the respective cylinder bores 16.

A lip seal 8 is provided on the drive shaft 7 on the front side of the radial roller bearing 39 in the front housing 3 and serves a seal for sealing the drive shaft 7. The lip seal 8 prevents the refrigerant gas and lubricating oil from leaking out of the compressor 1 by flowing along the drive shaft 7 whose front end extends out of the front housing 3. The lip seal 8, the radial roller bearing 39, the front housing 3 and the drive shaft 7 cooperate to define a shaft seal chamber 30. A first passage 31 is formed obliquely in the front housing 3 for fluid communication between the shaft seal chamber 30 and the crank chamber 6. The first passage 31 is so formed that the refrigerant gas containing therein the lubricating oil in the crank chamber 6 is drawn into the shaft seal chamber 30.

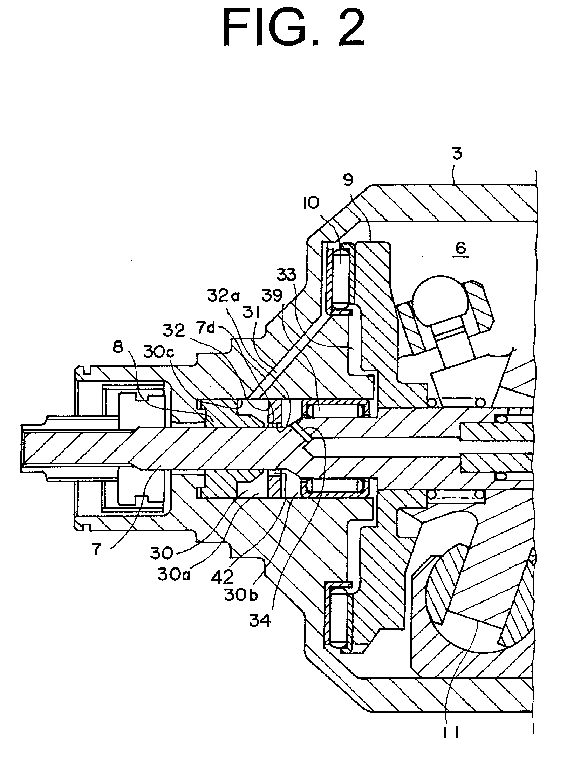

A partition 32 is provided in the shaft seal chamber 30 to separate the lip seal 8 and the radial roller bearing 39, so that a seal-side chamber 30a and a bearing-side chamber 30b are defined on opposite sides of the partition 32, as clearly seen in FIGS. 1 and 2. The partition 32 has an annular disc shape, and as shown in FIG. 2, a fluid passage 42 is formed between an inner circumferential surface 32a of the partition 32 and an outer circumferential surface 7d of the drive shaft 7 which faces the inner circumferential surface 32a. The fluid passage 42 has a dimension of about 0.2-0.3mm as measured in radial direction of the drive shaft 7. The partition 32 is so positioned in the shaft seal chamber 30 that the partition 32 does not prevent the first passage 31 and the seal-side chamber 30a of the shaft seal chamber 30 from communicating with each other. In addition, the fluid passage 42 is formed radially inward of an inner circumferential surface 30c of the shaft seal chamber 30.

A second passage 33 is formed on the rear side of the radial roller bearing 39 for fluid communication with the crank chamber 6. The second passage 33 extends radially between the front housing 3 and the lug plate 9 and communicates with the crank chamber 6 through the thrust bearing 10. The radial roller bearing 39 includes a clearance which provides fluid communication between the bearing-side chamber 30b in the shaft seal chamber 30 and the second passage 33. Thus, the bearing-side chamber 30b communicates with the crank chamber 6 through the above clearance in the radial roller bearing 39, the second passage 33 and the thrust bearing 10. In addition, a third passage 34 is formed obliquely in the drive shaft 7 for fluid communication of the bearing-side chamber 30b of the shaft seal chamber 30 with the axial passage 26 in the drive shaft 7. The third passage 34 is in communication with a discharge pressure region of the compressor as will be later described.

Referring back to FIG. 1, a discharge chamber 17 that provides a part of the discharge pressure region of the compressor is formed at the axial center of the rear housing 5 and connected to external refrigerant circuit through an outlet (not shown). A suction chamber 18 that provides a part of the suction pressure region of the compressor is formed annularly in the outer peripheral portion of the rear housing 5 and connected to the external refrigerant circuit through an inlet (not shown). The valve plate assembly 4 includes a suction port 19 and a suction valve (not shown) for each cylinder bore 16 for selective communication between the suction chamber 18 and each corresponding cylinder bore 16. The valve plate assembly 4 also includes a discharge port 20 and a discharge valve (not shown) for each cylinder bore 16 for selective communication between each corresponding cylinder bore 16 and the discharge chamber 17.

A control valve 21 is provided in the rear housing 5 for adjusting the flow rate of the refrigerant gas flown into the crank chamber 6 thereby to control the internal pressure in the crank chamber 6 (crank chamber pressure Pc). The control valve 21 is in communication with the discharge chamber 17 through a passage 21a, as shown in FIG. 1. In the control valve 21, temperature of the refrigerant gas from the discharge chamber 17 is lowered by a valve portion having a throttle (not shown). The control valve 21 is also in communication with a passage 22 which is formed in the rear housing 5. The passage 22 is in turn in communication with a passage 23 which is formed in the valve plate assembly 4. The passage 23 is in communication with a passage 24 formed in the cylinder block 2. The passage 24 is further in communication with the axial passage 26 formed in the drive shaft 7 through an opening 25 formed in the center of the cylinder block 2. The passage 26 is in communication with the third passage 34.

A passage 35 is formed in the drive shaft 7 at a position between the swash plate 11 and the lug plate 9 for allowing part of the refrigerant gas in the crank chamber 6 to flow therethrough to the suction chamber 18. The passage 35 is in communication with a passage 37 formed in the cylinder block 2 through the passage 36. A lip seal 38 is disposed at the rear end of the drive shaft 7 in such a way that a side of the passage 26 and a side of the passage 36 which are defined in the opening 25 are shut off from each other. The passage 37 communicates with a passage 41 which is formed in the valve plate assembly 4 and opened to the suction chamber 18.

Now, operation of the swash plate compressor 1 according to the first embodiment will be described with reference to FIGS. 1 and 2. As the drive shaft 7 is rotated by a drive source (not shown), the swash plate 11 is rotated to cause each piston 13 to slide reciprocally in each corresponding cylinder bore 16. The refrigerant gas which circulates in the external refrigerant circuit is drawn from the suction chamber 18 into each cylinder bore 16 through each suction port 19 and is compressed in the cylinder bore 16 by the piston 13. The compressed refrigerant gas in the cylinder bore 16 is discharged into the discharge chamber 17 through each corresponding discharge port 20 and then circulates in the external refrigerant circuit.

A part of the refrigerant gas in the discharge chamber 17 is drawn into the crank chamber 6 through the control valve 21 thereby to control the inclination of the swash plate 11 with respect to the drive shaft 7. Flow rate of the refrigerant gas drawn into the crank chamber 6 is changed by adjusting the opening degree of the control valve 21. The flow of refrigerant gas passing through the control valve 21 is throttled by the valve portion of the control valve 21 thereby to lower the temperature of the refrigerant gas. The refrigerant gas whose temperature has been thus lowered passes through the passages 22, 23, 24, 25, 26 and 34 in this order and is drawn into the bearing-side chamber 30b of the shaft seal chamber 30 so as to be in contact with the partition 32. Thereafter, the refrigerant gas is drawn to the crank chamber 6 through the radial roller bearing 39, the second passage 33 and the thrust bearing 10. Thus, the pressure of the refrigerant gas in the crank chamber 6 is adjusted as a crank chamber pressure Pc in accordance with the opening degree of the control valve 21, and the inclination of the swash plate 11 with respect to the drive shaft 7 is controlled by the pressure difference between the crank chamber pressure Pc and the internal pressure in each cylinder bore 16 thereby to adjust the displacement of the swash plate compressor 1. That is, the inclination of the swash plate 11 is changed by controlling the crank chamber pressure Pc in the crank chamber 6. The refrigerant gas in the crank chamber 6 passes through the passages 35, 36, 37 and 41 in this order and then is drawn into the suction chamber 18.

Now referring specifically to FIG. 2, behavior of the refrigerant gas around the shaft seal chamber 30 will be described. The refrigerant gas drawn into the crank chamber 6 contains therein lubricating oil, which exists in the crank chamber 6 and the shaft seal chamber 30 in the form of mist. In particular, when the lug plate 8 and the swash plate 11 are rotated by the drive shaft 7, oil attached on these parts is splashed radially outward, so that a relatively large quantity of oil exists in the periphery region of the crank chamber 6.

Since the lug plate 9 is rotated with the drive shaft 7, the pressure in the second passage 33 and the bearing-side chamber 30b of the shaft seal chamber 30 is reduced by the movement of the refrigerant gas caused by the rotation of the lug plate 9. The reduction of the pressure causes the refrigerant gas in the seal-side chamber 30a of the shaft seal chamber 30 to be drawn into the bearing-side chamber 30b through the fluid passage 42. At this time, the refrigerant gas in the crank chamber 6 is drawn through the first passage 31 into the seal-side chamber 30a of the shaft seal chamber 30. Thus, the refrigerant gas in the periphery region of the crank chamber 6 circulates flowing through the first passage 31, the seal-side chamber 30a of the shaft seal chamber 30, the fluid passage 42, the bearing-side chamber 30b of the shaft seal chamber 30, the clearance in the radial roller bearing 39, the second passage 33 and the thrust bearing 10 in this order, thereby forming a circulation passage for the refrigerant gas.

The fluid passage 42 in the shaft seal chamber 30 is formed radially inward of inner circumferential surface 30c of the shaft seal chamber 30. In addition, the refrigerant gas containing therein the lubricating oil and drawn into the seal-side chamber 30a of the shaft seal chamber 30 is whirled in the seal-side chamber 30a of the shaft seal chamber 30 with the rotation of the drive shaft 7. The lubricating oil contained in the refrigerant gas tends to accumulate in the vicinity of the inner circumferential surface 30c of the shaft seal chamber 30 due to the influence of centrifugal force. Since the refrigerant gas exists in the vicinity of the drive shaft 7 where the fluid passage 42 is formed has a smaller oil content, therefore, only less amount of oil is drawn through the fluid passage 42 into the bearing-side chamber 30b, but the refrigerant gas is drawn through the fluid passage 42 easily. Thus, the lubricating oil drawn into the seal-side chamber 30a tends to stay there. This tendency becomes noticeable when the drive shaft 7 is rotated at a high speed. Since the lubricating oil tends to stay in the chamber 30a adjacent to the lip seal 8, lubrication of the lip seal 8 can be accomplished effectively.

In addition, since the cross sectional area of the fluid passage 42 is smaller than that of the first passage 31, the lubricating oil is easy to be drawn from the first passage 31 into the seal-side chamber 30a of the shaft seal chamber 30, but it is hard for the lubricating oil to be drawn from the seal-side chamber 30a of the shaft seal chamber 30 into the bearing-side chamber 30b of the shaft seal chamber 30. Consequently, the lubricating oil is supplied to the lip seal 8 efficiently.

Furthermore, since the refrigerant gas the flow of which has been throttled by the valve portion of the control valve 21 to lower the temperature thereof is supplied into the bearing-side chamber 30b through the passage 34 in the drive shaft 7 to be in contact with the partition 32, the partition 32 is cooled thereby to cool the seal-side chamber 30a of the shaft seal chamber 30. Therefore, the lip seal 8 located adjacent to the shaft seal chamber 30 is also cooled. In addition, since the drive shaft 7 is also cooled, the part of the drive shaft 7 which slides relative to the lip seal 8 is prevented from being heated, so that the temperature of the sliding portion of the lip seal 8 is lowered.

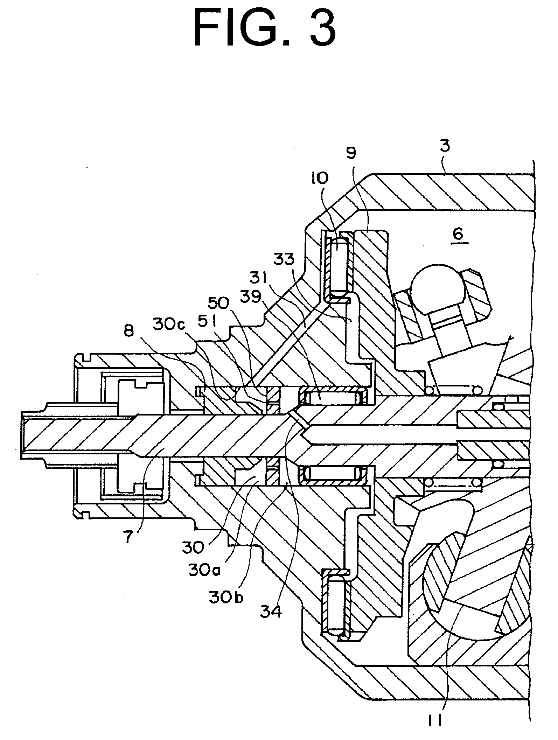

A compressor according to a second embodiment is shown in FIG. 3. In the following description of the second and other embodiments, like reference numerals or symbols denote the like elements or parts of the compressor used in the description of the first embodiment and the detailed description of such elements or parts will be omitted. The second embodiment uses a partition 50 which is different in structure from the partition 32 of the first embodiment shown in FIG. 1. The partition 50 includes two fluid passages 51 which have small hole shape through which the seal-side chamber 30a and the bearing-side chamber 30b of the shaft seal chamber 30 are in communication with each other. The fluid passages 51 are located radially inward of the inner circumferential surface 30c of the shaft seal chamber 30.

It is noted that the number of the fluid passages 51 may be singular or plural and that a plurality of the fluid passages 51 may be arranged on the same circle of the cross sectional area. The total of sectional areas of the fluid passages 51 formed in the partition 50 is comparable to the cross section area of the fluid passage 42 of the first embodiment. As long as the refrigerant gas is drawn into the bearing-side chamber 30b of the shaft seal chamber 30, the cross sectional area, the arrangement and the number of the fluid passages 51 may be selected as desired. The compressor of such a structure also provides effects similar to those of the first embodiment.

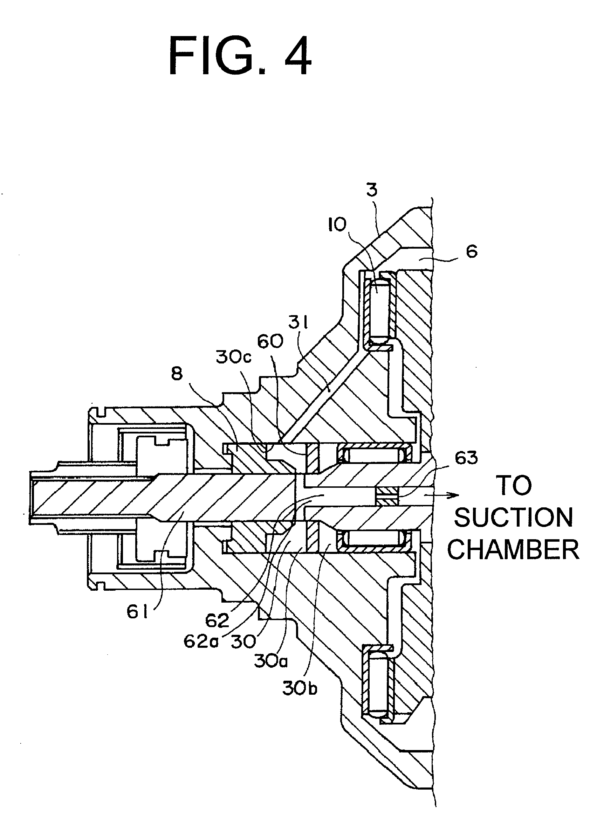

A compressor according to a third embodiment is shown in FIG. 4. The third embodiment is a modification of the first embodiment and differs therefrom in the shape of the partition and the passage in the drive shaft. Although the partition 60 has the substantially the same shape as the partition 32 of the first embodiment, the former partition 60 eliminates the fluid passage 42 of the first embodiment. The partition 60 is in contact with a drive shaft 61 with little clearance therebetween. The drive shaft 61 has an axial communication passage 62 formed therein which provides fluid communication between the seal-side chamber 30a of the shaft seal chamber 30 and a suction chamber (not shown) which corresponds to the suction chamber 18 of FIG. 1. The communication passage 62, which is a fifth passage of the present invention, connects the shaft seal chamber 30 to the suction pressure chamber which is a part of the suction pressure region. In addition, a throttle portion 63 is provided in the communication passage 62 to reduce the cross sectional area of the communication passage 62. The throttle portion 63 has a cross sectional area which is defined to such an extent that allows the refrigerant gas in the seal-side chamber 30a of the shaft seal chamber 30 to be drawn into the suction pressure region. For example, the cross sectional area of the throttle portion 63 may be comparable to the cross sectional area of the fluid passage 42 of the first embodiment.

Since the communication passage 62 is in communication with the suction-pressure region of the compressor, the pressure in the communication passage 62 is lower than the pressure in the crank chamber 6, so that pressure difference is arisen between the communication passage 62 and the crank chamber 6 which the first passage 31 communicates with. This pressure difference causes the refrigerant gas in the crank chamber 6 in the vicinity of the first passage 31 to be drawn into the seal-side chamber 30a of the shaft seal chamber 30 and then be drawn toward the suction chamber through the communication passage 62. Since the communication passage 62 through which the refrigerant gas drawn into the seal-side chamber 30a of the shaft seal chamber 30 is drawn is formed radially inward of the inner circumferential surface 30c of the shaft seal chamber 30, only less amount of the lubricating oil is drawn from the seal-side chamber 30a of the shaft seal chamber 30 into the communication passage 62, but the refrigerant gas is drawn into the communication passage 62 easily. Therefore, the lubricating oil which has been drawn into the seal-side chamber 30a of the shaft seal chamber 30 tends to remain in the seal-side chamber 30a. In addition, since the throttle portion 63 is provided in the communication passage 62, the lubricating oil is drawn easily from the first passage 31 into the seal-side chamber 30a of the shaft seal chamber 30, but it is difficult for the lubricating oil to be drawn through the throttle portion 63 from the shaft seal chamber side of the throttle portion 63 into the suction chamber side of the throttle portion 63. Consequently, the lubricating oil can be supplied efficiently to the lip seal 8. It is noted that the throttle portion 63 may be provided in an area 62a of the communication passage 62 in the vicinity of the lip seal 8. The throttle portion 63 may also be provided in the area corresponding to the valve plate assembly 4 shown in FIG. 1.

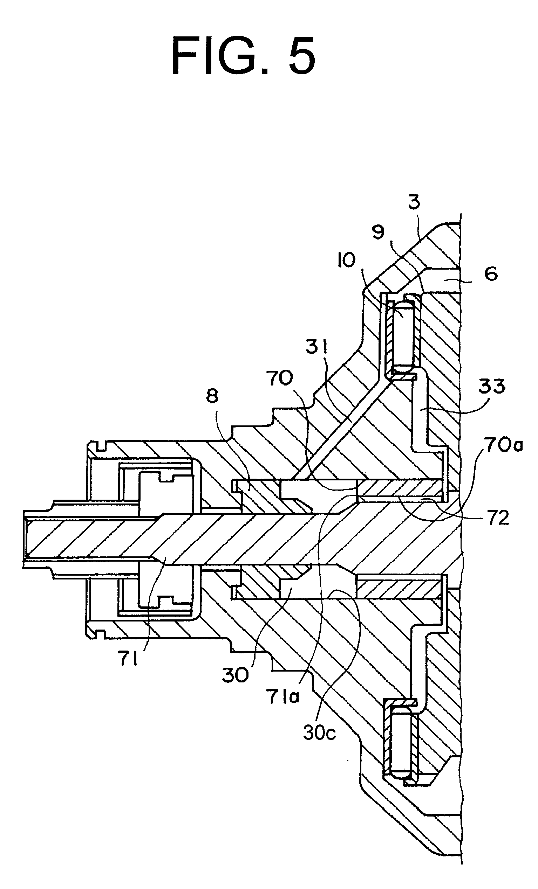

A compressor according to a fourth embodiment is shown in FIG. 5. The fourth embodiment eliminates the partition 32 of the first embodiment shown in FIG. 1, but uses a plain bearing 70 as a slide bearing instead of the radial roller bearing 39 of the first embodiment. The plain bearing 70 has a tubular shape and is fitted in the front housing 3. As will be appreciated from comparison between the drawings of FIGS. 2 and 5, the drive shaft 71 of the fourth embodiment has no passage formed therein for communication with the shaft seal chamber 30. A fluid passage 72 is formed between the inner circumferential surface 70a of the tubular plain bearing 70 and the outer circumferential surface 71 a of the drive shaft 71 which faces the inner circumferential surface 70a. The fluid passage 72 is formed radially inward of the inner circumferential surface 30c of the shaft seal chamber 30. The dimension of the fluid passage 72 as measured in radial direction is about 0.1 mm. The second passage 33 which is in communication with the crank chamber 6 is formed on the rear side of the plain bearing 70 as in the case of the first embodiment. The second passage 33 extends radially between the front housing 3 and the lug plate 9 and is in communication with the crank chamber 6 through the thrust bearing 10.

In this fourth embodiment, the plain bearing 70 performs the same function as the partition 32 of the first embodiment. That is, the pressure in the second passage 33 is reduced by the movement of the refrigerant gas caused by the rotation of the lug plate 9. The reduction of the pressure causes the refrigerant gas in the shaft seal chamber 30 to be drawn into the second passage 33 through the fluid passage 72. Thus, the refrigerant gas in the periphery region of the crank chamber 6 circulates flowing through the first passage 31, the shaft seal chamber 30, the fluid passage 72, the second passage 33 and the thrust bearing 10 in this order, thereby forming a circulation passage for the refrigerant gas. Consequently, the effects similar to those of the first embodiment are obtained.

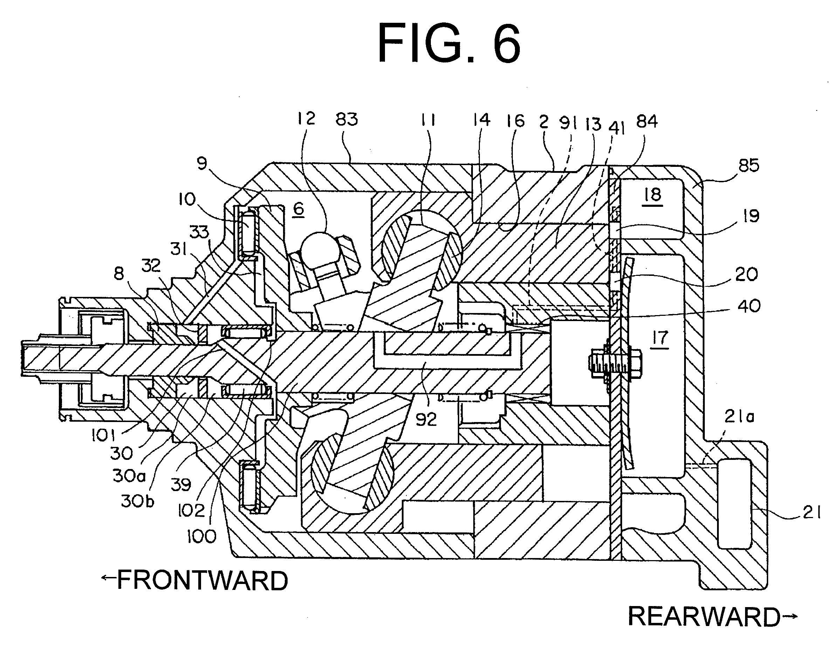

A compressor according to a fifth embodiment is shown in FIG. 6. The fifth embodiment differs from the first embodiment in that a passage of the refrigerant gas supplied from the shaft seal chamber 30 is provided in a drive shaft 100, as shown in FIG. 6. The drive shaft 100 includes an oblique hole 101 which is in communication with the bearing-side chamber 30b of the shaft seal chamber 30. A circular groove 102 is formed in the outer circumferential surface of the drive shaft 100 on the rear side of the radial roller bearing 39 for fluid communication with the hole 101. The circular groove 102 is also in communication with the second passage 33. The hole 101 and the groove 102 form a fourth passage of the present invention.

In the fifth embodiment, the low-temperature refrigerant gas drawn into the bearing-side chamber 30b of the shaft seal chamber 30 is drawn through the drive shaft 100 while cooling the drive shaft 100. Therefore, generating heat between the lip seal 8 and the drive shaft 100 is prevented, so that the cooling effect of the lip seal 8 can be further enhanced.

The partitions of the first, second and fifth embodiments which are exposed to the low-temperature refrigerant gas from the control valve 21 should be made of a material having a thermally high conductivity, such as aluminum alloy, magnesium alloy or copper for enhanced cooling effect of the lip seal 8.

Therefore, the present examples and embodiments are to be considered as illustrative and not restrictive, and the invention is not to be limited to the details given herein but may be modified within the scope of the appended claims.

A compressor includes a housing, a rotary shaft, a bearing, a seal, a shaft seal chamber, a first passage, a second passage and the fluid passage. The first passage connects a crank chamber to the shaft seal chamber The second passage is formed between a lug plate fixed to the rotary shaft and the housing so as to connect the bearing to the crank chamber. The partition is provided in the shaft seal chamber for dividing the shaft seal chamber into a seal-side chamber and a bearing-side chamber. The first passage is in communication with the seal-side chamber of the shaft seal chamber. The fluid passage for accumulating the lubricating oil and for communicating the first passage and the second passage is formed radially inward of an inner circumferential surface of the shaft seal chamber.

## Claims

1. A compressor including a housing, a rotary shaft, a bearing, a seal, a shaft seal chamber, a first passage, a second passage and a fluid passage, the housing defining a crank chamber, at least one end of the rotary shaft extending out from the housing, the bearing being provided in the housing for rotatably supporting the rotary shaft, the seal being provided on the rotary shaft on an axially outer side of the bearing for preventing refrigerant gas from leaking out of the housing along the rotary shaft, the shaft seal chamber being defined by the seal, the bearing, the housing and the rotary shaft, the first passage connecting the crank chamber to the shaft seal chamber so that the refrigerant gas containing therein lubricating oil in the crank chamber is drawn into the shaft seal chamber, the second passage being formed between a lug plate fixed to the rotary shaft and the housing so as to connect the bearing to the crank chamber,
**characterized in that**
the fluid passage accumulates the lubricating oil and communicates with the first passage and the second passage, and **in that** the fluid passage is formed radially inward of an inner circumferential surface of the shaft seal chamber.

2. The compressor according to claim 1, further including a partition provided in the shaft seal chamber for dividing the shaft seal chamber into a seal-side chamber and a bearing-side chamber, wherein the first passage is in communication with the seal-side chamber of the shaft seal chamber, the partition having the fluid passage through which the refrigerant gas is drawn from the seal-side chamber of the shaft seal chamber to the bearing-side chamber of the shaft seal chamber which is in communication with the second passage through the bearing.

3. The compressor according to claim 2, wherein the fluid passage is formed between an inner circumferential surface of the partition and an outer circumferential surface of the rotary shaft which faces the inner circumferential surface.

4. The compressor according to claim 2, wherein the fluid passage is a hole that extends through the partition.

5. The compressor according to any one of claims 2 through 4, wherein the rotary shaft includes a third passage which connects the bearing-side chamber of the shaft seal chamber to a discharge pressure region thereby to supply the refrigerant gas in the discharge pressure region to the bearing-side chamber to be in contact with the partition.

6. The compressor according to any one of claims 2 through 4, wherein the rotary shaft includes a fourth passage which connects the bearing-side chamber of the shaft seal chamber to the second passage thereby to supply the refrigerant gas on the bearing-side chamber of the shaft seal chamber to the second passage.

7. The compressor according to any one of claims 1 through 6, wherein cross sectional area of the fluid passage is smaller than that of the first passage.

8. The compressor according to claim 1 or 7, wherein the bearing is a plain bearing, the refrigerant gas in the shaft seal chamber being drawn into the second passage through the fluid passage between an inner circumferential surface of the plain bearing and an outer circumferential surface of the rotary shaft.

9. A compressor including a housing, a rotary shaft, a bearing, a seal, a shaft seal chamber and a first passage, the housing defining a crank chamber, at least one end of the rotary shaft extending out from the housing, the bearing being provided in the housing for rotatably supporting the rotary shaft, the seal being provided on the rotary shaft on an axially outer side of the bearing for preventing refrigerant gas from leaking out of the housing along the rotary shaft, the shaft seal chamber being defined by the seal, the bearing, the housing and the rotary shaft, the first passage connecting the crank chamber to the shaft seal chamber so that the refrigerant gas containing therein lubricating oil in the crank chamber is drawn into the shaft seal chamber, **characterized in that**
a partition is provided in the shaft seal chamber for dividing the shaft seal chamber into a seal-side chamber and a bearing-side chamber, and **in that** the rotary shaft includes a fifth passage which connects the seal-side chamber of the shaft seal chamber to a suction pressure region and which has a throttle whose cross sectional area is smaller than that of the first passage.
